# FASCICULE DE BREVET EUROPEEN

(11) **EP 0 905 384 B1**
(45) Date de publication et mention de la délivrance du brevet: **19.11.2003**
(21) Numéro de dépôt: 98402294.7
(22) Date de dépôt: 17.09.1998
(51) Int. Cl.: F16B 7/04, F16L 3/08

(54) **Dispositif d'assemblage entre deux tubes**
Vorrichtung zum Zusammenbau zweier Rohre
Device for assembling two pipes

(30) Priorité: 18.09.1997 FR 9711630
(43) Date de publication de la demande: 31.03.1999
(73) Titulaire: COMPAGNIE GENERALE DES MATIERES NUCLEAIRES, 78140 Velizy Villacoublay (FR)
(72) Inventeur: Delouvee, Bernard, 92250 La Garenne-Colombes (FR); Vernerey, Alain, 78890 Garancieres (FR)
(74) Mandataire: Le Roux, Martine

(56) Documents cités:
- FR-A- 1 091 746
- FR-A- 1 125 029
- GB-A- 2 120 310
- GB-A- 2 241 735
- US-A- 5 111 770
- US-A- 5 215 281

## Description

L'invention concerne un dispositif d'assemblage convenant à l'assemblage de deux tubes : un premier tube de section circulaire d'axe X servant de support et un deuxième tube formant une tuyauterie supportée, de section circulaire d'axe Y, ces deux tubes étant placés sensiblement à 90° l'un de l'autre.

De façon plus précise, l'invention concerne un dispositif permettant d'attacher un tube disposé horizontalement ou de façon inclinée, ce tube constituant une tuyauterie dans laquelle circule un fluide, tel qu'un fluide caloporteur ou un fluide radioactif, sur un support disposé sensiblement à 90° du tube, ce support étant de préférence disposé horizontalement.

Pour des applications particulières, telles que l'assemblage de tuyauteries à des éléments de support, les tuyauteries étant notamment destinées à la circulation de fluides d'utilité tels que des fluides caloporteurs et/ou des fluides radioactifs dans des installations nucléaires par exemple, il est nécessaire que le dispositif d'assemblage montre une tenue au séisme particulièrement bonne, qu'il permette la fixation entre un élément de support et des tubes de diamètre différent et que le montage dudit dispositif d'assemblage soit le plus aisé et le plus sûr possible.

Habituellement, pour le supportage de tuyauteries, ces tuyauteries étant généralement groupées en nappes horizontales, verticales ou inclinées, on utilise des profilés standards ouverts. Afin que l'utilisation de tels profilés permette une tenue au séisme suffisante, ces profilés ouverts assemblés en une charpente de soutien doivent présenter une section très importante ou être renforcés par l'adjonction d'un profilé plat venant les refermer.

On comprend que, dans une installation devant résister, pour des raisons évidences de sûreté, à des séismes, il est nécessaire d'intégrer un dispositif d'assemblage conçu pour offrir une inertie satisfaisante, notamment en torsion.

Un objet de la présente invention est de fournir un dispositif d'assemblage qui présente une bonne tenue au séisme, qui soit facile à assembler et qui permette l'assemblage entre deux éléments présentant une section de dimension différente.

Pour atteindre ce but le dispositif d'assemblage selon l'invention comprend les caractéristiques de la revendication 1.

On comprend que, grâce à l'utilisation des mêmes trous de l'embase pour le montage des premiers moyens de liaison et des deuxièmes moyens de liaison, chacun d'entre eux entourant partiellement au moins un tronçon de l'un des tubes, il existe une bonne fixation et une bonne cohésion du dispositif d'assemblage selon l'invention qui présente ainsi une inertie satisfaisante pour la tenue au séisme.

De plus, l'utilisation de supports tubulaires renforce la symétrie du montage entre le support et la tuyauterie et permet d'incliner à volonté la tuyauterie autour de son support.

Selon l'invention, lesdits premiers moyens de liaison comprennent au moins un étrier comportant un arceau plat en forme de U convenant pour entourer partiellement un des tubes et dont les extrémités sont au contact ou à proximité de l'embase et un arceau de serrage convenant pour enserrer ledit arceau plat sur tout son contour extérieur, chaque extrémité dudit arceau de serrage étant apte à traverser ladite embase au travers d'un desdits trous et présentant des moyens de serrage dudit arceau de serrage par rapport audit arceau plat et lesdits deuxièmes moyens de liaison comprennent au moins un collier plat dont chacune des extrémités est apte à être fixée à l'embase au niveau d'un desdits trous au moyen de l'extrémité correspondante dudit arceau de serrage.

Par ailleurs, il est prévu que, de préférence, chacune des extrémités du collier plat forme une patte de liaison qui comprend une ouverture destinée à être disposée en regard d'un trou de l'embase.

Selon un mode préféré de réalisation, les moyens de serrage de l'arceau de serrage des premiers moyens de liaison comprennent des filetages destinés à traverser l'embase au travers des trous et à coopérer avec des écrous de serrage.

Selon une variante avantageuse :
- le collier plat des deuxièmes moyens de liaison est en forme de Ω (il comporte une partie centrale en forme de U aux extrémités de laquelle sont raccordées, de préférence sensiblement à 90°, des pattes de liaison, de préférence rectangulaires et planes) ;
- l'embase possède quatre trous la traversant de part en part suivant une direction parallèle à l'axe Z ; les axes X, Y, Z, deux à deux orthogonaux, représentant respectivement :
   * l'axe du tube support ;
   * l'axe de la tuyauterie supportée ;
   * un axe orthogonal auxdits axes du tube support et de la tuyauterie supportée ;
- le dispositif d'assemblage possède deux étriers et deux colliers plats.

Dans le cadre de cette variante avantageuse, on a de préférence, lesdits trous (de l'embase), étriers et colliers disposés de façon symétrique ; les plans (X,Z) et (Y,Z) formant alors des plans de symétrie du dispositif.

On comprend que ce mode préférentiel de réalisation entraîne une structure symétrique permettant une meilleure fixation de l'ensemble, qu'il existe alors une possibilité d'avoir ou de ne pas avoir de serrage des différents éléments lors du montage ainsi qu'une possibilité de faire varier l'inclinaison du dispositif d'assemblage en fonction de la pente de la tuyauterie et/ou du support.

De préférence, le dispositif d'assemblage est utilisé pour supporter des tuyauteries sur un support horizontal mais on comprend que le dispositif d'assemblage selon l'invention permet également d'autres configurations telles que l'assemblage d'une tuyauterie horizontale ou légèrement inclinée (l'angle d'inclinaison, valant par exemple 2°) sur un tube support disposé verticalement ou bien un assemblage entre une tuyauterie et un tube support formant entre eux un plan possédant n'importe quelle orientation, pourvu que la tuyauterie et le tube support forment entre eux un angle sensiblement égal à 90°.

Le dispositif d'assemblage selon la présente invention est avantageusement, mais non exclusivement, utilisé pour assembler des tuyauteries, destinées à la circulation de fluides d'utilité et/ou de fluides radioactifs dans une galerie ou cellule de l'industrie nucléaire, à des éléments de support tubulaire.

On peut réaliser différentes variantes du dispositif d'assemblage selon l'invention, afin que celui-ci permette soit un mouvement relatif de translation entre tuyauterie supportée et tube support (guidage longitudinal, transversal ou les deux à la fois), soit un blocage total entre tuyauterie supportée et tube support. Pour cela, dans le cadre du mode préféré de mise en oeuvre du dispositif d'assemblage de l'invention, on modifie notamment les dimensions de l'arceau plat, celles-ci conditionnant l'existence ou non du serrage de l'étrier autour du tube (support ou tuyauterie supportée) : un arceau plat présentant des dimensions plus importantes que le diamètre du tube entouré crée un jeu et permet une liberté de mouvement du tube entouré par l'étrier comportant cet arceau plat. Si l'on désire obtenir une possibilité de mouvement entre le collier plat et le tube qu'il entoure, on prévoit alors une pièce supplémentaire ou cale qui éloigne le fond du collier plat de l'embase et crée un jeu entre l'embase et le tube entouré par ce collier plat. On peut également entourer le tube support par l'étrier et la tuyauterie supportée par le collier plat ou, inversement, entourer le tube support par le collier plat et la tuyauterie supportée par l'étrier.

D'autres caractéristiques et avantages de la présente invention apparaîtront mieux à la lecture de la description qui suit de plusieurs formes de réalisation de l'invention données à titre d'exemple. Ladite description se réfère aux figures annexées sur lesquelles :
- la figure 1 est une vue schématique en perspective de l'ensemble d'un dispositif d'assemblage selon l'invention ;
- les figures 2A et 2B représentent, respectivement en vue de face et de côté, des premiers moyens de liaison constitués par un étrier et entourant un tube de diamètre D l;

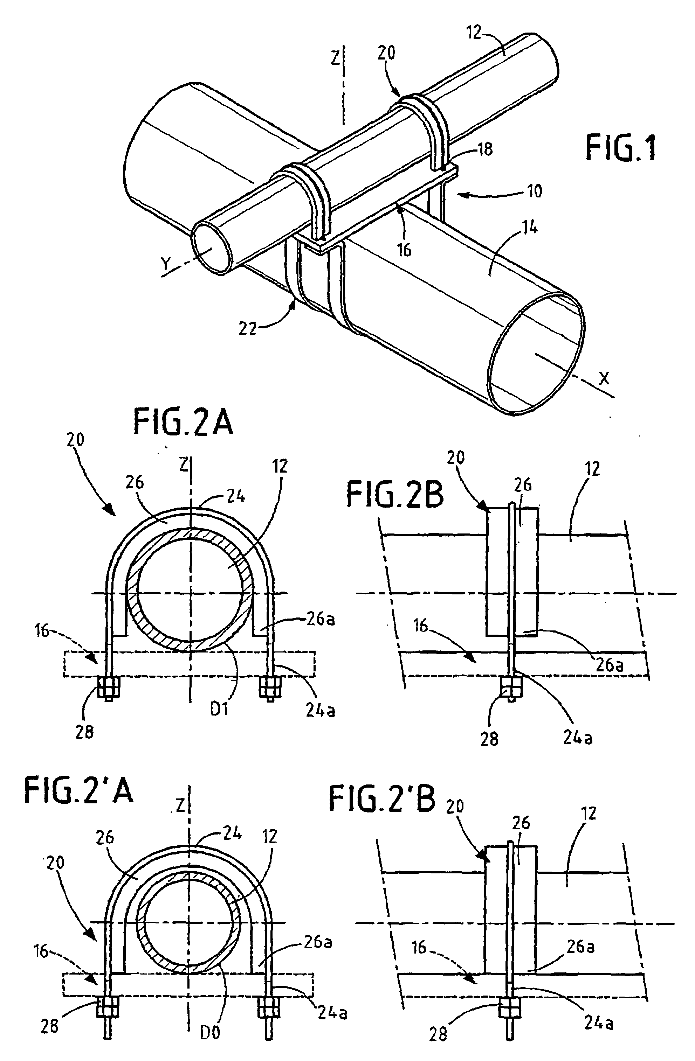

- les figures 2'A et 2'B sont des vues similaires à celles des figures 2A et 2B dans le cas où le tube entouré possède un diamètre D0 beaucoup plus petit que D1 ;

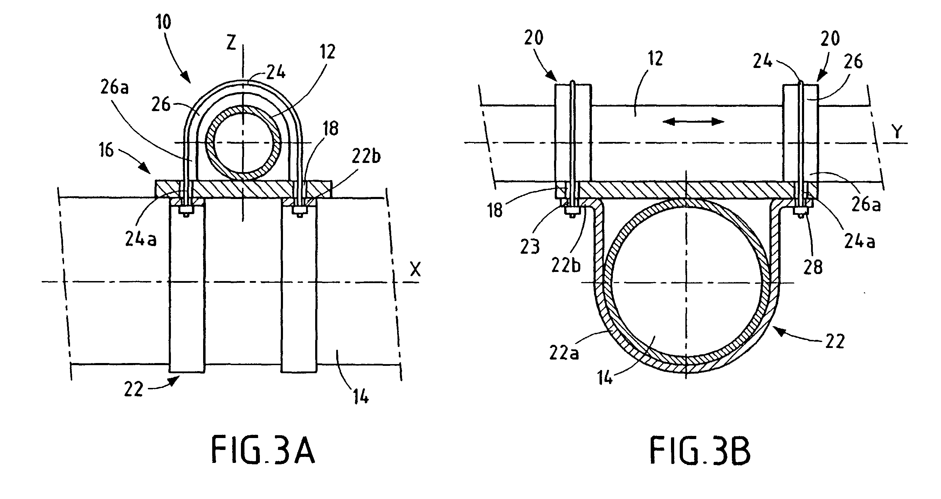

- les figures 3A et 3B représentent, respectivement en vue de face et de côté, une première forme de réalisation du dispositif d'assemblage selon l'invention qui permet un degré de liberté pour le tube supporté, selon une translation longitudinale par rapport à l'axe de ce tube supporté ;

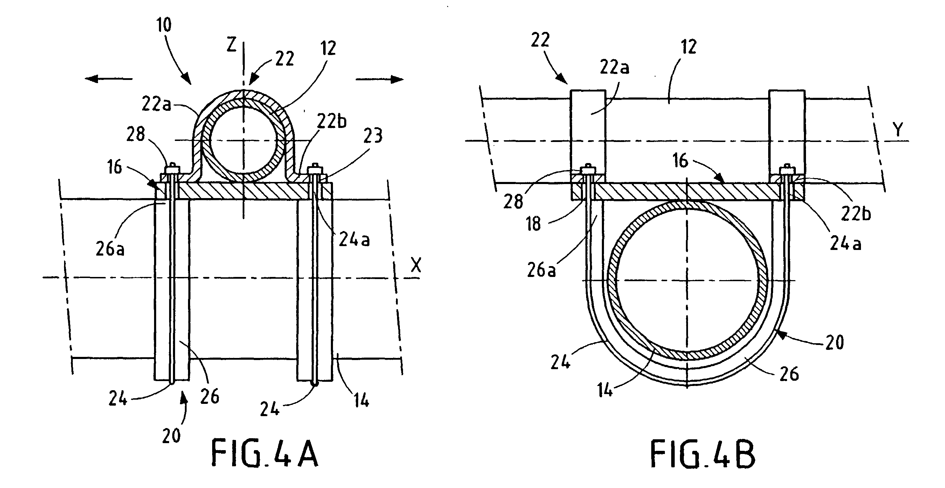

- les figures 4A et 4B représentent, respectivement en vue de face et de côté, une deuxième forme de réalisation du dispositif d'assemblage selon l'invention qui engendre un degré de liberté pour le tube supporté, selon une translation transversale par rapport à l'axe de ce tube supporté ;

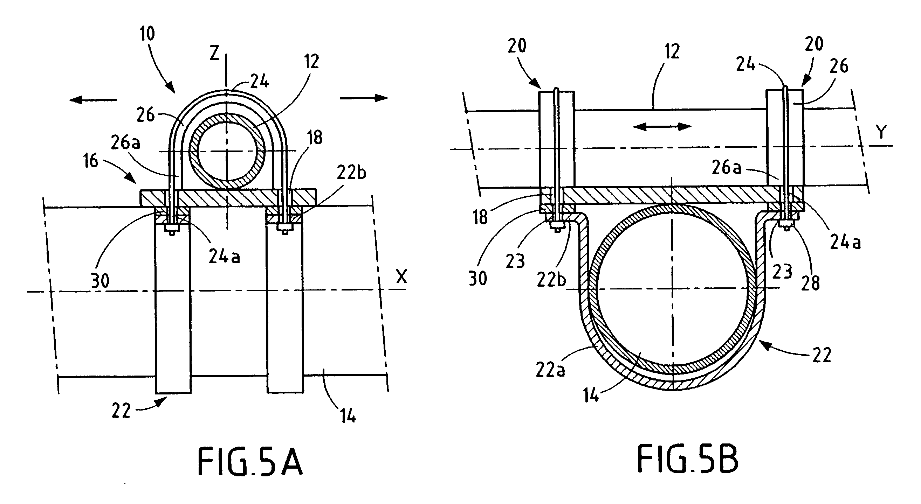

- les figures 5A et 5B représentent, respectivement en vue de face et de côté, une troisième forme de réalisation du dispositif d'assemblage selon l'invention qui accorde deux degrés de liberté en translation du tube supporté ; et

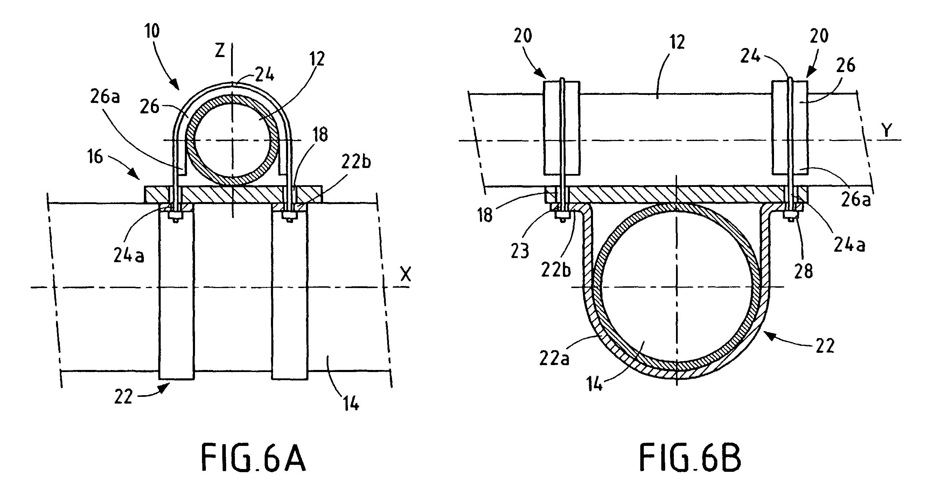

- les figures 6A et 6B représentent, respectivement en vue de face et de côté, une quatrième forme de réalisation du dispositif d'assemblage selon l'invention qui n'accorde aucun degré de liberté au tube supporté qui est ainsi bloqué sur son support.

Comme cela est représenté sur la figure 1, un dispositif d'assemblage 10 de l'invention permet d'assembler entre eux deux tubes, de diamètres éventuellement différents, placés sensiblement à 90° l'un de l'autre : un premier tube 14 d'axe X, constituant le tube support est relié à un deuxième tube 12, d'axe Y, constituant la tuyauterie supportée. Sur la figure 1, ces deux tubes 12 et 14 sont placés horizontalement mais on conçoit tout à fait que les deux axes X et Y puissent présenter n'importe quelle autre orientation sans pour autant que le dispositif d'assemblage 10 soit modifié.

Selon le mode de réalisation préféré et représenté sur la figure 1, le dispositif d'assemblage 10 comporte une embase 16 parallélépipédique rectangulaire percée de quatre trous 18 ; cette embase 16 ayant sa longueur et sa largeur respectivement parallèles aux axes Y et X des tubes et étant placée entre la tuyauterie 12 et le tube support 14. Le dispositif d'assemblage 10 comprend également deux étriers 20 entourant chacun un tronçon de la tuyauterie 12 et deux colliers plats 22 entourant chacun un tronçon du tube support 14, les extrémités des étriers et des colliers plats étant reliées entre elles et à l'embase au moyen des trous 18 comme il sera décrit plus en détail par la suite.

On se reporte maintenant aux figures 2A et 2B qui illustrent de façon plus détaillée un étrier 20. Chaque étrier 20 se compose, d'une part, d'un arceau de serrage 24 à section circulaire constituant un cavalier destiné à entourer un tronçon de l'un des tubes et dont les extrémités 24a, rectilignes et filetées, sont destinées à traverser deux des trous 18 de l'embase 16 et à coopérer avec des écrous de serrage 28 et, d'autre part, d'un arceau plat 26 constituant une fourrure disposée entre le tube et l'arceau de serrage 24.

Comme on peut le voir de façon plus précise sur les figures 2A et 2'A, selon le diamètre du tube, formant éventuellement tuyauterie et entouré par l'étrier 20, et la taille de l'arceau plat 26, on peut prévoir ou non un certain jeu entre ledit tube et ledit arceau plat 26.

Dans le cas des figures 2A et 2B, le tube 12 possède un grand diamètre D1 égal à l'écart séparant les branches rectilignes du U de l'arceau plat 26. Ledit diamètre D1 est plus grand que la distance séparant les extrémités 26a de l'arceau plat 26 du fond du U. Un tronçon de la surface externe du tube 12, dont la section constitue le demi-cercle supérieur du tube 12, est en contact avec l'intérieur de l'arceau plat 26, dans la partie supérieure de l'arceau plat 26 formant la base arrondie du U. La partie inférieure du tube 12 est en contact avec l'embase 16, représentée en traits pointillés sur la figure 2A, selon une portion de génératrice du tube 12. Dans ce cas de figure, le tube 12 est bloqué par l'étrier 20 dont la fixation est effectuée par le montage des écrous de serrage 28 sur les extrémités filetées 24a de l'arceau de serrage 24, les écrous 28 étant serrés pour bloquer ledit tube 12 entre l'embase 16 et l'étrier 20 ; les branches rectilignes du U de l'arceau plat 26 étant d'une longueur telle que leurs extrémités 26a ne sont pas en contact avec l'embase 16.

Dans le deuxième cas de figure représenté sur les figures 2'A et 2'B, le diamètre D0 du tube 12 est (plus petit que D1) plus petit que la distance séparant les extrémités 26a de l'arceau plat 26 du fond du U. Lors du montage de l'étrier 20, en serrant les écrous 28 sur les extrémités filetées 24a de l'arceau de serrage 24, il existe une position limite correspondant au moment où les extrémités 26a de l'arceau plat 26 entrent en contact avec l'embase 16 de sorte que les écrous 28 sont bloqués et que le tube 12 n'est pas monté de façon serrée dans l'étrier 20 puisqu'il existe un jeu entre ledit tube 12 (de diamètre extérieur D0) et l'arceau plat 26. Dans le cas illustré sur les figures 2'A et 2'B, le jeu est présent à la fois entre le tube 12 et les branches rectilignes de l'arceau plat 26, et entre le tube 12 et l'ensemble constitué par l'embase 16 et la base arrondie du U de l'arceau plat.

On comprend, d'après les explications précédentes, que le serrage de l'étrier 20 sur le tube qu'il entoure est conditionné par les dimensions de l'arceau plat 26, c'est-à-dire le diamètre de la base arrondie du U, d'une part, et la longueur des branches du U, d'autre part, en fonction du diamètre du tube, de sorte que l'arceau plat 26 transmet ou non au tube concerné le serrage de l'arceau de serrage 24 disposé autour dudit tube. De plus, l'arceau plat 26 constitue une fourrure de protection du tube puisqu'il empêche la déformation de la surface externe du tube qui est en contact avec l'étrier 20, en répartissant les efforts de compression engendrés par l'arceau de serrage 24, sur une portion de la périphérie d'un tronçon de tube correspondant à la largeur de l'arceau plat 26.

A des fins de comparaison, on a représenté, sur les figures 2A et 2'A, deux diamètres possibles (respectivement D1 et D0, avec D1>D0) pour le tube 12, tuyauterie supportée ou tube support. Il est bien évident que l'on adapte, dans la pratique, les dimensions des premiers moyens de liaison à celle du tube 12 concerné et non l'inverse.

Le diamètre (externe) dudit tube 12 est en fait imposé par des contraintes, notamment par le débit du fluide circulant dans ledit tube (12) (cas d'une tuyauterie supportée) et par l'épaisseur de la paroi dudit tube (12) et/ou par la résistance de la structure (cas d'une tuyauterie supportée et d'un tube support). Ledit diamètre étant fixé, on adapte les dimensions desdits premiers moyens de liaisons - notamment celles de l'arceau plat 26 - audit diamètre, selon les degrés de liberté recherchés. Pour générer un jeu entre ledit arceau plat et le tube qu'il entoure, voire pour répartir un tel jeu, de façon dissymétrique par rapport aux deux axes dudit tube, on dispose de deux paramètres :
- le diamètre interne (de la partie circulaire) de l'arceau plat ;
- la longueur des branches rectilignes dudit arceau plat.

Ainsi, en choisissant un étrier 20 comportant un arceau plat 26 de longueur et de diamètre adaptés, on peut prévoir un montage serré du tube dans l'étrier 20 de sorte que ce tube ne présente aucun degré de liberté ou bien prévoir un arceau plat 26 plus grand qui permette un certain jeu entre le tube et l'étrier 20 de sorte que ce tube puisse coulisser dans l'étrier ce qui lui accorde un degré de liberté en translation selon son propre axe.

Le dispositif d'assemblage 10 proposé comprend, de préférence (comme montré sur les figures annexées), deux étriers 20 et deux colliers plats 22 disposés de façon à former un ensemble symétrique par rapport aux plans (X, Z) et (Y, Z) ; les axes X, Y, Z étant orthogonaux entre eux. Dans cette configuration, les plans médians de chaque couple de colliers 22 ou d'étriers 20 sont écartés l'un de l'autre d'une distance supérieure au diamètre du tube que ce couple n'entoure pas.

Nous allons maintenant décrire successivement, en relation avec les figures 3A à 6B, quatre formes de réalisation différentes du dispositif d'assemblage de l'invention permettant un nombre varié de degrés de liberté pour la tuyauterie supportée 12 et/ou le tube support 14. En effet, selon la configuration et l'emplacement du dispositif d'assemblage 10, il peut être nécessaire que certains dispositifs d'assemblage réalisent un blocage serré entre le tube support et la tuyauterie supportée. Dans d'autres cas de figure, notamment afin que la structure d'ensemble résiste au séisme ou bien dans le cas où il faut prendre en compte la dilatation des tuyauteries, on peut souhaiter des dispositifs d'assemblage permettant un mouvement relatif entre la tuyauterie supportée et le tube support afin d'éviter des déformations trop importantes et/ou une désolidarisation entre la tuyauterie supportée et le tube support et/ou une rupture de l'un des deux tubes.

Les figures 3A et 3B illustrent une première forme de réalisation du dispositif d'assemblage selon l'invention dans laquelle on accorde un degré de liberté à la tuyauterie supportée qui peut se déplacer en translation selon son propre axe Y, ce qui engendre un guidage longitudinal de la tuyauterie supportée 12 par l'étrier 20.

Cette première forme de réalisation du dispositif d'assemblage se caractérise en ce que les étriers 20 entourent le deuxième tube 12 (tuyauterie supportée), en ce que les arceaux 26 desdits étriers 20 sont dimensionnés de sorte que lorsque leurs extrémités 26a sont en contact avec l'embase 16, le deuxième tube 12 puisse coulisser dans lesdits étriers 20, et en ce que les colliers 22, entourant le premier tube 14 (support), sont conformés de sorte que lorsque leurs pattes de liaison 22b sont plaquées contre l'embase 16, par les écrous de serrage 28 montés sur les extrémités filetées 24a des arceaux de serrage 24, ledit premier tube 14 est bloqué.

Dans cette première forme de réalisation, après montage de l'étrier 20, les extrémités 26a de l'arceau plat 26 entrent en contact avec l'embase 16 et il existe un certain jeu entre la tuyauterie supportée 12 et l'étrier 20.

Deux colliers plats 22 sont montés autour du tube support 14 et la description qui va suivre de leur structure et de leur mode de fixation est valable pour les quatre différentes formes de réalisation décrites ici.

Les colliers plats 22 comportent une partie centrale 22a en forme de U aux extrémités de laquelle sont raccordées, de préférence sensiblement à 90°, des pattes de liaison 22b, de préférence rectangulaires et planes. Cette définition de la forme des colliers plats 22 est valable pour toute la présente description dans laquelle on résume ladite définition par l'appellation "en forme de Ω". De façon constante dans toute la présente description, la longueur et le diamètre de la partie centrale 22a en forme de U sont prévus pour entourer de façon serrée un tube. Quand les pattes de liaison 22b sont en appui contre l'embase 16, le tube est en contact contre cette embase 16 le long d'une de ces génératrices : le tube entouré par un collier plat 22 est donc bloqué par ce collier plat 22. Les pattes de liaison 22b des colliers plats 22 sont munies d'une ouverture 23 placée dans le prolongement des trous 18 de l'embase 16 de sorte que chaque extrémité 24a d'un arceau de serrage 24 traverse successivement un trou 18 puis une ouverture 23, un écrou de serrage 28 étant monté sur le filetage de l'extrémité 24a en venant en contact contre la face arrière de la patte de liaison 22b, la face avant de cette patte de liaison 22b étant en contact contre l'embase 16. Ainsi, les étriers 20, d'une part, et les colliers de serrage 22, d'autre part, sont montés deux à deux parallèles, les deux étriers étant croisés par rapport aux deux colliers et coopèrent entre eux au travers des quatre trous 18.

Pour la première forme de réalisation illustrée sur les figures 3A et 3B, les étriers 20 entourent, sans la serrer, la tuyauterie supportée 12 et les deux colliers plats 22 enserrent le tube support 14.

On se réfère maintenant aux figures 4A et 4B qui illustrent la deuxième forme de réalisation du dispositif d'assemblage 10 selon l'invention.

Cette deuxième forme de réalisation du dispositif d'assemblage se caractérise en ce que les étriers 20 entourent le premier tube 14 (support), en ce que les arceaux plats 26 desdits étriers 20 sont dimensionnés de sorte que lorsque leurs extrémités 26a sont en contact avec l'embase 16, le premier tube 14 puisse coulisser dans lesdits étriers 20, et en ce que les colliers 22, entourant le deuxième tube 12 (tuyauterie supportée), sont conformés de sorte que lorsque leurs pattes de liaison 22b sont plaquées contre l'embase 16, par les écrous de serrage 28 montés sur les extrémités filetées 24a des arceaux de serrage 24, le deuxième tube 12 est bloqué.

Dans ce cas, on cherche à obtenir un autre degré de liberté pour la tuyauterie supportée 12, c'est-à-dire une translation selon un axe parallèle à l'axe X du tube support 14 et perpendiculaire par rapport à l'axe Y de la tuyauterie supportée 12. Pour obtenir ce guidage transversal, il suffit de respecter le montage décrit précédemment, en relation avec les figures 3A et 3B, en inversant la position des étriers 20 et des colliers plats 22. La tuyauterie supportée 12 est enserrée par les deux colliers 22 et le tube support 14 est entouré par les deux étriers 20 dans lesquels l'arceau plat 26 possède une longueur et un diamètre suffisants pour que, lorsque ses extrémités 26a sont en contact avec l'embase 16, il existe un jeu entre le tube support 14 et l'étrier 20. Le tube support 14 est en contact contre l'embase 16 dans le cas illustré aux figures 4A et 4B puisque l'ensemble fixe comprenant la tuyauterie supportée 12, les colliers plats 22 et l'embase 16 est en appui sur le tube support 14 qui est sous la tuyauterie 12. De cette manière, le dispositif d'assemblage 10 reste solidaire de la tuyauterie supportée 12, cet ensemble pouvant se déplacer selon la direction de l'axe X sur le tube support 14.

On se reporte maintenant aux figures 5A et 5B qui illustrent une troisième forme de réalisation du dispositif d'assemblage 10 selon l'invention dans lequel on cherche à obtenir pour la tuyauterie supportée 12 deux degrés de liberté correspondant à deux translations, respectivement selon des directions parallèles aux axes X et Y. Cette troisième forme de réalisation est obtenue à partir du montage correspondant à la première ou à la deuxième forme de réalisation (le cas de figure illustré sur les figures 5A et 5B découle de la première forme de réalisation mais on pourrait également partir du montage correspondant à la deuxième forme de réalisation) dans laquelle on ajoute une cale 30 percée entre les pattes de liaison 22b de chaque collier 22 et l'embase 16, le perçage de cette cale 30 étant positionné pour se placer, lors du montage, en regard et dans le prolongement de l'ouverture 23 d'une patte de liaison 22b et d'un trou 18 de l'embase 16. Quatre cales percées 30 sont ainsi nécessaires dans le cas particulier illustré sur les figures 5A et 5B mais, pour réaliser la troisième forme de réalisation du dispositif d'assemblage de l'invention, on peut envisager d'autres variantes telles que l'utilisation de deux cales fines et longues comprenant chacune un perçage correspondant aux extrémités des deux colliers plats 22 situées du même côté du tube 14 (cette variante particulière modifierait la figure 5A en reliant les deux cales 30 visibles qui ne formeraient alors qu'une seule cale, la figure 5B n'étant alors pas modifiée).

De cette manière, on obtient un support libre pour des tuyauteries posées. En effet, ces cales 30 engendrent un jeu entre le tube support 14 (figure 5B) et l'ensemble embase 16, colliers plats 22, qui est égal à l'épaisseur desdites cales 30.

Cette troisième forme de réalisation du dispositif d'assemblage se caractérise en ce que les étriers 20 entourent le deuxième tube 12 (tuyauterie supportée), en ce qu'il comporte en outre une cale 30 percée interposée entre chaque patte de liaison 22b desdits colliers plats 22 et l'embase 16 et traversée par les extrémités filetées 24a des arceaux de serrage, de façon que lorsque le premier tube 14 (support) est plaqué contre le fond du collier plat 22, il existe un jeu de montage entre ledit premier tube 14 et l'embase 16 permettant un coulissement du dispositif 10 le long du premier tube 14 (support) et en ce que les arceaux plats 26 desdits étriers 20 sont dimensionnés de sorte que lorsque leurs extrémités 26a sont en contact avec l'embase 16, le deuxième tube 12 peut coulisser dans lesdits étriers 20.

On se reporte maintenant aux figures 6A et 6B qui illustrent la quatrième forme de réalisation du dispositif d'assemblage selon l'invention. Cette quatrième forme de réalisation du dispositif d'assemblage se caractérise en ce que les étriers 20 entourent le deuxième tube 12 (tuyauterie supportée), en ce que les arceaux plats 26 desdits étriers 20 sont dimensionnés de sorte que lorsque leurs extrémités 26a sont à proximité ou en contact avec l'embase 16, le deuxième tube 12 soit bloqué par lesdits étriers 20, et en ce que les colliers 22, entourant le premier tube 14 (support), sont conformés de sorte que lorsque leurs pattes de liaison 22b sont plaquées contre l'embase 16, par les écrous de serrage 28 montés sur les extrémités filetées 24a des arceaux de serrage, le premier tube 14 (support) est bloqué.

Cette quatrième forme de réalisation de l'invention propose un dispositif d'assemblage n'accordant aucun degré de liberté à la tuyauterie supportée 12 de sorte que l'on obtient un support bloqué pour des tuyauteries bloquées. Dans cette quatrième forme de réalisation, les étriers 20 entourent la tuyauterie supportée 12 et les colliers plats 22 enserrent le tube support 14 mais on pourrait inverser la position relative des étriers 20 et des colliers plats 22 sur les tubes. On dispose alors d'arceaux plats 26 de longueur plus courte et possédant un diamètre intérieur au plus égal au diamètre extérieur de la tuyauterie supportée 12 de sorte que, de préférence, lorsque l'on serre les écrous de serrage 28 sur les extrémités filetées 24a des arceaux de serrage 24, la tuyauterie supportée 12 entre en contact avec l'arceau plat 26 d'une part, et avec l'embase 16 selon une génératrice du tube 12, d'autre part, de préférence avant que les extrémités 26a de l'arceau plat 26 n'entrent en contact avec l'embase 16. Ainsi, dans ce cas, cet arceau plat 26, ou fourrure courte, ne vient pas au contact de l'embase. Cet arceau plat constitue une protection de la zone de la tuyauterie 12 entourée par l'étrier.

D'autres moyens de fixation entre les étriers 20, l'embase 16 et les colliers 22 peuvent être envisagés au lieu d'une coopération entre des trous, des tiges filetées et des écrous ; notamment on peut prévoir des formes complémentaires qui s'encastrent les unes dans les autres par clipsage ou par déformation élastique.

Les colliers plats 22 peuvent présenter d'autres formes que celle décrite précédemment, c'est-à-dire en forme de Ω. Ainsi, en utilisant, par exemple, une embase de forme générale parallélépipédique dont les quatre coins comportent des saillies traversées par des trous orientés selon une direction appartenant au plan (X, Y), cela permet d'utiliser des colliers plats en forme de U plutôt qu'en forme de Ω.

Sur les figures annexées, la tuyauterie 12 supportée possède un diamètre plus petit que celui du tube support 14 mais on conçoit tout à fait que les tubes 12 et 14 aient un diamètre sensiblement égal ou bien que le diamètre de la tuyauterie supportée soit plus grand que celui du tube support. Ainsi, on comprend que, sans sortir du cadre de la présente invention, toutes les combinaisons de diamètres, du tube support 14 et de la tuyauterie 12, sont possibles.

## Revendications

1. Dispositif d'assemblage (10) convenant à l'assemblage de deux tubes (14,12) :
- un premier tube ( 14) de section circulaire d'axe X servant de support ; et
- un deuxième tube (12), formant une tuyauterie supportée, de section circulaire d'axe Y, ces deux tubes (12, 14) étant placés sensiblement à 90° l'un de l'autre, ledit dispositif comprenant :
- une embase (16) sensiblement plane, avantageusement parallélépipédique, à disposer entre lesdits deux tubes (12, 14) et percée d'au moins deux trous (18) ;
- des premiers moyens de liaison (20) à serrage réglable entre un desdits tubes (12) et ladite embase (16); lesdits premiers moyens de liaison (20) convenant pour entourer partiellement au moins un tronçon dudit tube (12) et coopérer avec lesdits trous (18) ; lesdits premiers moyens de liaison comprenant au moins un étrier (20) qui comporte un arceau plat (26) en forme de U convenant pour entourer partiellement ledit tube (12) avec ses extrémités (26a) au contact ou à proximité de l'embase (16) et un arceau de serrage (24) convenant pour enserrer ledit arceau plat (26) sur tout son contour extérieur, chaque extrémité (24a) dudit arceau de serrage (24) étant apte à traverser ladite embase (16) au travers d'un desdits trous (18) et présentant des moyens de serrage dudit arceau de serrage (24) par rapport audit arceau plat (26) ; et
- des deuxièmes moyens de liaison (22) entre l'autre desdits tubes (14) et ladite embase (16) ; lesdits deuxièmes moyens de liaison (22) convenant pour entourer partiellement au moins un tronçon dudit autre tube (14), et coopérer avec lesdits trous (18) et avec lesdits premiers moyens de liaison (20) ; lesdits deuxièmes moyens de liaison comprenant au moins un collier plat (22) dont chacune des extrémités (22b) est apte à être fixée à l'embase (16) au niveau d'un desdits trous (18) au moyen de l'extrémité (24a) correspondante dudit arceau de serrage (24).

2. Dispositif d'assemblage selon la revendication 1, **caractérisé en ce que** chacune des extrémités dudit collier plat (22) forme une patte de liaison (22b) qui comprend une ouverture (23) destinée à être disposée en regard d'un trou (18) de ladite embase (16).

3. Dispositif d'assemblage selon l'une des revendications 1 ou 2, **caractérisé en ce qu'**il comporte en outre une cale (30) percée destinée à être interposée entre chacune des extrémités (22b) dudit collier plat (22) et l'embase (16) et traversée par les extrémités (24a) dudit arceau de serrage (24), de façon à obtenir une possibilité de mouvement du tube destiné à être entouré par ledit collier plat (22).

4. Dispositif d'assemblage selon l'une quelconque des revendications 1 à 3, **caractérisé en ce que** les moyens de serrage dudit arceau de serrage (24) desdits premiers moyens de liaison comprennent des filetages destinés à traverser ladite embase (16) au travers desdits trous (18) et à coopérer avec des écrous de serrage (28).

5. Dispositif d'assemblage selon l'une quelconque des revendications 2 à 4, **caractérisé en ce que** ledit collier plat (22) desdits deuxièmes moyens de liaison est en forme de Ω, **en ce que** ladite embase (16) possède quatre trous (18) la traversant de part en part suivant une direction parallèle à l'axe Z, les axes X, Y, et Z étant orthogonaux entre eux et **en ce qu'**il possède deux étriers (20) et deux colliers plats (22), lesdits trous (18), étriers (20) et colliers (22) étant avantageusement disposés de façon symétrique, les plans (X, Z ) et (Y, Z ) formant alors des plans de symétrie dudit dispositif.

6. Dispositif d'assemblage selon la revendication 5, **caractérisé en ce que** les étriers (20) entourent le deuxième tube (12), **en ce que** les arceaux plats (26) desdits étriers (20) sont dimensionnés de sorte que lorsque leurs extrémités (26a) sont en contact avec l'embase (16), le deuxième tube (12) puisse coulisser dans lesdits étriers (20), et **en ce que** les colliers (22), entourant le premier tube (14), sont conformés de sorte que lorsque leurs pattes de liaison (22b) sont plaquées contre l'embase (16), par les écrous de serrage (28) montés sur les extrémités filetées (24a) des arceaux de serrage (24), le premier tube (14) est bloqué.

7. Dispositif d'assemblage selon la revendication 5, **caractérisé en ce que** les étriers (20) entourent le premier tube (14), **en ce que** les arceaux plats (26) desdits étriers (20) sont dimensionnés de sorte que lorsque leurs extrémités (26a) sont en contact avec l'embase (16), le premier tube (14) puisse coulisser dans lesdits étriers (20), et **en ce que** les colliers (22), entourant le deuxième tube (12), sont conformés de sorte que lorsque leurs pattes de liaison (22b) sont plaquées contre l'embase (16), par les écrous de serrage (28) montés sur les extrémités filetées (24a) des arceaux de serrage (24), le deuxième tube (12) est bloqué.

8. Dispositif d'assemblage selon la revendication 5, **caractérisé en ce que** les étriers (20) entourent le deuxième tube (12), **en ce qu'**il comporte en outre une cale (30) percée interposée entre chaque patte de liaison (22b) desdits colliers plats (22) et l'embase (16) et traversée par les extrémités filetées (24a) des arceaux de serrage (24), de façon que lorsque le premier tube (14) est plaqué contre le fond du collier plat (22), il existe un jeu de montage entre ledit premier tube (14) et l'embase (16) permettant un coulissement du dispositif (10) le long dudit premier tube (14) et **en ce que** les arceaux plats (26) desdits étriers (20) sont dimensionnés de sorte que lorsque leurs extrémités (26a) sont en contact avec l'embase (16), le deuxième tube (12) peut coulisser dans lesdits étriers (20).

9. Dispositif d'assemblage selon la revendication 5, **caractérisé en ce que** les étriers (20) entourent le deuxième tube (12), **en ce que** les arceaux plats (26) desdits étriers (20) sont dimensionnés de sorte que lorsque leurs extrémités (26a) sont à proximité ou en contact avec l'embase (16), ledit deuxième tube (12) soit bloqué par lesdits étriers (20), et **en ce que** les colliers (22), entourant le premier tube (14), sont conformés de sorte que lorsque leurs pattes de liaison (22b) sont plaquées contre l'embase (16), par les écrous de serrage (28) montés sur les extrémités filetées (24a) des arceaux de serrage, le premier tube (14) est bloqué.

10. Utilisation du dispositif d'assemblage selon l'une quelconque des revendications précédentes, pour assembler des tuyauteries (12) à des éléments de support tubulaires (14), lesdites tuyauteries (12) étant notamment destinées à la circulation de fluides d'utilité et/ou de fluides radioactifs dans une galerie technique ou une cellule, de l'industrie nucléaire par exemple.

## Patentansprüche

1. Verbindungsvorrichtung (10), die zum Verbinden zweier Rohre (14, 12) geeignet ist,
- eines ersten Rohres (14) mit einem kreisförmigen Querschnitt mit der Achse X, das als Träger dient, und
- eines zweiten Rohres (12) mit kreisförmigem Querschnitt mit der Achse Y, das eine getragene Rohrleitung bildet,
wobei diese beiden Rohre (12, 14) im Wesentlichen unter einem Winkel von 90 ° zueinander angeordnet sind, wobei die Vorrichtung umfasst:
- eine im Wesentlichen ebene, zweckmäßig parallelepipedische Auflagefläche (16), die zwischen den beiden Rohren (12, 14) anzuordnen ist und mindestens zwei durchgehende Löcher (18) aufweist;
- erste Verbindungseinrichtungen (20) mit einstellbarer Spannkraft zwischen einem der beiden Rohre (12) und der Auflagefläche (16); wobei die genannten ersten Verbindungseinrichtungen (20) geeignet sind, einen Abschnitt des Rohres (12) mindestens teilweise zu umgreifen und mit den genannten Löchern (18) zu kooperieren; wobei die genannten ersten Verbindungseinrichtungen mindestens einen Bügel (20) umfassen, der umfasst einen U-förmigen flachen Bogen (26), der geeignet ist, das Rohr (12) teilweise zu umgreifen, wobei seine Enden (26a) im Kontakt mit oder in der Nähe der Auflagefläche (16) angeordnet sind, und einen Spannbogen (24), der geeignet ist, den flachen Bogen (26) über seinen ganzen äußeren Umfang zu umgeben, wobei jedes Ende (24a) des Spannbogens (24) die Auflagefläche (16) durch eines der Löcher (18) durchdringen kann und Einrichtungen zum Einspannen des Spannbogens (24) in bezug auf den flachen Bogen (26) aufweist; und
- zweite Verbindungseinrichtungen (22) zwischen den Rohren (14) und der Auflagefläche (16); wobei die zweiten Verbindungseinrichtungen (22) geeignet sind, mindestens einen Abschnitt des anderen Rohres (14) teilweise zu umgreifen und mit den Löchern (18) und mit den ersten Verbindungseinrichtungen (20) zu kooperieren; wobei die zweiten Verbindungseinrichtungen umfassen mindestens eine flache Schelle (22), bei der jedes der Enden (22b) an der Auflagefläche (16) im Bereich eines der Löcher (18) mittels des entsprechenden Endes (24a) des Spannbogens (24) fixiert werden kann.

2. Verbindungsvorrichtung nach Anspruch 1, **dadurch gekennzeichnet, dass** jedes der Enden der flachen Schelle (22) einen Verbindungsflansch (22b) bildet, der eine Öffnung (23) aufweist, die gegenüber einem Loch (18) der Auflagefläche (24) anzuordnen ist.

3. Verbindungsvorrichtung nach einem der Ansprüche 1 oder 2, **dadurch gekennzeichnet, dass** sie außerdem eine Unterlegscheibe (30) mit einem durchgehenden Loch umfasst, die dazu bestimmt ist, zwischen jedem der Enden (22b) der flachen Schelle (22) und der Auflagefläche (16) angeordnet und von den Enden (24a) des Spannbogens (24) so durchquert zu werden, dass das Rohr, das dazu bestimmt ist, von der genannten flachen Schelle (22) umgriffen zu werden, beweglich ist.

4. Verbindungsvorrichtung nach einem der Ansprüche 1 bis 3, **dadurch gekennzeichnet, dass** die Einrichtungen zum Spannen des Spannbogens (24) der ersten Verbindungseinrichtungen Gewinde aufweisen, die dazu bestimmt sind, die Auflagefläche (16) durch die Löcher (18) hindurch zu durchqueren und mit Spannmuttern (28) zu kooperieren.

5. Verbindungsvorrichtung nach einem der Ansprüche 2 bis 4, **dadurch gekennzeichnet, dass** die flache Schelle (22) der zweiten Verbindungseinrichtungen eine Ω-Form hat, dass die Auflagefläche (16) vier durchgehende Löcher (18) aufweist in einer Richtung parallel zur Achse Z, wobei die Achsen X, Y und Z orthogonal zueinander angeordnet sind, und dass sie zwei Bügel (20) und zwei flache Schellen (22) aufweist, wobei die Löcher (18), die Bügel (20) und die Schellen (22) zweckmäßig symmetrisch angeordnet sind, sodass die Ebenen (X, Z) und (Y, Z) dann Symmetrieebenen der Vorrichtung bilden.

6. Verbindungsvorrichtung nach Anspruch 5, **dadurch gekennzeichnet, dass** die Bügel (20) das zweite Rohr (12) umgreifen, dass die flachen Bögen (26) der Bügel (20) so dimensioniert sind, dass dann, wenn ihre Enden (26a) mit der Auflagefläche (16) in Kontakt stehen, das zweite Rohr (12) in den Bügeln (20) gleitend verschiebbar ist, und dass die Schellen (22), die das erste Rohr (14) umgreifen, so geformt sind, dass dann, wenn ihre Verbindungsflansche (22b) mittels der Spannmuttern (28), die auf die beiden mit Gewinde versehenen Enden (24a) der Spannbögen (24) aufgeschraubt sind, gegen die Auflagefläche (16) gepresst werden, das erste Rohr (14) blockiert ist.

7. Verbindungsvorrichtung nach Anspruch 5, **dadurch gekennzeichnet, dass** die Bügel (20) das erste Rohr (14) umgreifen, dass die ebenen Bögen (26) der Bügel (20) so dimensioniert sind, dass dann, wenn ihre Enden (26a) mit der Auflagefläche (16) in Kontakt stehen, das erste Rohr (14) in den Bügeln (20) gleitend verschiebbar ist, und dass die Schellen (22), die das zweite Rohr (12) umgreifen, so geformt sind, dass dann, wenn ihre Verbindungsflansche (22b) mittels der Spannmuttern (28), die auf die mit Gewinde versehenen Enden (24a) der Spannbögen (24) aufgeschraubt sind, gegen die Auflagefläche (16) gepresst werden, das zweite Rohr (12) blockiert ist.

8. Verbindungsvorrichtung nach Anspruch 5, **dadurch gekennzeichnet, dass** die Bügel (20) das zweite Rohr (12) umgreifen, dass die Vorrichtung außerdem eine Unterlegscheibe (30) mit durchgehendem Loch aufweist, die zwischen jedem Verbindungsflansch (22b) der flachen Schellen (22) und der Auflagefläche (16) angeordnet ist und von den mit Gewinde versehenen Enden (24a) der Spannbögen (24) so durchquert wird, dass dann, wenn das erste Rohr (14) gegen die Unterseite der flachen Schelle (22) gepresst wird, ein Montagespielraum zwischen dem ersten Rohr (14) und der Auflagefläche (16) vorhanden ist, der ein gleitendes Verschieben der Vorrichtung (10) entlang des ersten Rohres (14) erlaubt, und dass die flachen Bögen (26) der Bügel (20) so dimensioniert sind, dass dann, wenn ihre Enden (26a) mit der Auflagefläche (16) in Kontakt stehen, das zweite Rohr (12) in den Bügeln (20) gleitend verschiebbar it.

9. Verbindungsvorrichtung nach Anspruch 5, **dadurch gekennzeichnet, dass** die Bügel (20) das zweite Rohr (12) umgreifen, dass die flachen Bögen (26) der Bügel (20) so dimensioniert sind, dass dann, wenn ihre Enden (26a) sich in der Nähe der oder im Kontakt mit der Auflagefläche (16) befinden, das zweite Rohr (12) durch die Bügel (20) blockiert ist, und dass die Schellen (22), die das erste Rohr (14) umgreifen, so geformt sind, dass dann, wenn ihre Verbindungsflansche (22b) mittels der Spannmuttern (28), die auf die mit Gewinde versehenen Enden (24a) der Spannbögen aufgeschraubt sind, gegen die Auflagefläche (16) gepresst werden, das erste Rohr (14) blockiert ist.

10. Verwendung der Verbindungsvorrichtung nach einem der vorhergehenden Ansprüche zum Verbinden von Rohrleitungen (12) mit Rohrträgerelementen (14), wobei die Rohrleitungen (12) insbesondere bestimmt sind für die Zirkulation von Gebrauchsfluids und/oder radioaktiven Fluids in einer technischen Galerie oder in einer Zelle beispielsweise der Atomindustrie.

## Claims

1. Device (10) for connecting together two tubes (14, 12) :
- a first tube (14) of circular cross-section with axis X, acting as a support, and
- a second tube (12) forming a supported pipe, of circular cross-section with axis Y, these two tubes (12, 14) being placed at approximately 90° from one another,
said device comprising:
- an approximately flat, advantageously parallelepipedal, base (16) adapted to be placed between said two tubes (12, 14) and pierced with at least two holes (18);
- first adjustable-tightness means (20) adapted to join together one of said tubes (12) and said base (16); said first joining means (20) being adapted to partially surround at least a portion of said tube (12) and interact with said holes (18), said first joining means comprising at least one yoke (20) which comprises a flat U-shaped hoop (26) adapted to partially surround said tube (12) and the ends (26a) of which are in contact with or close to the base (16), and a clamping hoop (24) for gripping said flat hoop (26) over its entire external periphery, each end (24a) of said clamping hoop (24) passing through said base (16) through one of said holes (18) and having means for tightening said clamping hoop (24) with respect to said flat hoop (26) ; and
- second means (22) adapted to join together the other of said tubes (14) and said base (16); said second joining means (22) being adapted to partially surround at least a portion of said other tube (14) and interact with said holes (18) and with said first joining means (20) ; said second joining means comprising at least one flat collar (22), each of the ends (22b) of which is attached to said base (16) at one of said holes (18) by means of the corresponding end (24a) of said clamping hoop (24).

2. The connecting device according to claim 1, **characterized in that** each of said ends of said flat collar (22) forms a joining lug (22b) which comprises an opening (23) intended to be placed facing a hole (18) in said base (16).

3. The connecting device according to one of claims 1 or 2, **characterized in that** it further comprises a driller spacer piece (30) adapted to be inserted between each of the ends (22b) of said flat collar (22) and the base (16) and to be passed through by the ends (24a) of said clamping hoop (24), so as to obtain for the tube to be surrounded by said flat collar (22) a possibility of moving.

4. The connecting device according to any one of claims 1 to 3, **characterized in that** the means for tightening said clamping hoop (24) of said first joining means comprise screw threads intended to pass through said base (16) through said holes (18) and to interact with tightening nuts (28).

5. The connecting device according to any one of claims 2 to 4, **characterized in that** said flat collar (22) of said second joining means is Ω-shaped, **in that** said base (16) has four holes (18) passing right through it in a direction parallel to the Z axis, the X, Y and Z axes being mutually orthogonal, and **in that** it has two yokes (20) and two flat collars (22), said holes (18), yokes (20) and collars (22) advantageously being arranged symmetrically, the planes (X, Z) and (Y, Z) then forming planes of symmetry of the said device.

6. The connecting device according to claim 5, **characterized in that** the yokes (20) surround the second tube (12), **in that** the flat hoops (26) of said yokes (20) are dimensioned in such a way that when their ends (26a) are in contact with the base (16), the second tube (12) can slide in said yokes (20), and **in that** the collars (22) surrounding the first tube (14) are shaped in such a way that when their joining lugs (22b) are pressed against the base (16) by the tightening nuts (28) mounted on the threaded ends (24a) of the clamping hoops (24), the first tube (14) is locked in place.

7. The connecting device according to claim 5, **characterized in that** the yokes (20) surround the first tube (14), **in that** the flat hoops (26) of said yokes (20) are dimensioned in such a way that when their ends (26a) are in contact with the base (16), the first tube (14) can slide in said yokes (20), and **in that** the collars (22) surrounding the second tube (12) are shaped in such a way that when their joining lugs (22b) are pressed against the base (16) by the tightening nuts (28) mounted on the threaded ends (24a) of the tightening hoops (24), the second tube (12) is locked in place.

8. The connecting device according to claim 5, **characterized in that** the yokes (20) surround the second tube (12), **in that** it also comprises a drilled spacer piece (30) inserted between each joining lug (22b) of said flat collars (22) and the base (16) and through which the threaded ends (24a) of the clamping hoops (24) pass so that when the first tube (14) is pressed against the end of the flat collar (22) there is slack between said first tube (14) and the base (16), allowing the device (10) to slide along said first tube ( 14) and **in that** the flat hoops (26) of said yokes (20) are dimensioned in such a way that when their ends (26a) are in contact with the base (16), the second tube (12) can slide in said yokes (20).

9. The connecting device according to claim 5, **characterized in that** the yokes (20) surround the second tube (12), **in that** the flat hoops (26) of said yokes (20) are dimensioned in such a way that when their ends (26a) are close to or in contact with the base (16), said second tube (12) is locked in place by said yokes (20), and **in that** the collars (22) surrounding the first tube (14) are shaped in such a way that when their joining lugs (22b) are pressed against the base (16) by the tightening nuts (28) mounted on the threaded ends (24a) of the tightening hoops, the first tube (14) is locked in place.

10. Use of the connecting device according to any one of the preceding claims for connecting pipes (12) to tubular support elements (14), the said pipes (12) in particular being intended for the flow of utility fluids and/or radioactive fluids in a service gallery or a cell, for example in the nuclear industry.
